# EUROPEAN PATENT SPECIFICATION

(11) **EP 0 484 167 B1**
(45) Date of publication and mention of the grant of the patent: **17.05.1995**
(21) Application number: 91310099.6
(22) Date of filing: 31.10.1991
(51) Int. Cl.: G02B 6/42

(54) **Laser diode module with pigtail fiber**
Laserdiodenmodul mit Glasfaserausgang
Module de diode laser avec fibre de raccordement

(30) Priority: 31.10.1990 JP 296096/90
(43) Date of publication of application: 06.05.1992
(73) Proprietor: NEC CORPORATION, Tokyo (JP)
(72) Inventor: Shigeno, Kazuo, Minato-ku, Tokyo (JP); Ohno, Hiroshi, Shiranuimachi, Uto-gun, Kumamoto (JP)
(74) Representative: Garratt, Peter Douglas

(56) References cited:
- EP-A- 0 259 018
- US-A- 4 192 574
- PATENT ABSTRACTS OF JAPAN vol. 6, no. 189 (E-133)(1067) 28 September 1982 ; & JP-A-57 100 781
- PATENT ABSTRACTS OF JAPAN vol. 5, no. 44 (E-50)(716) 24 March 1981 ; & JP-A-55 166 972

## Description

The present invention relates to a laser diode module, and more specifically to a laser diode module in which the optical axes of a laser diode and an optical fiber pig-tail are each relatively adjusted.

A laser diode (hereinafter referred to as "LD") module used in optical fiber communication is often marketed in the form of a module provided with an optical fiber pig-tail guiding light output power and is used under widely-varying environmental conditions ranging from the low to high temperatures.

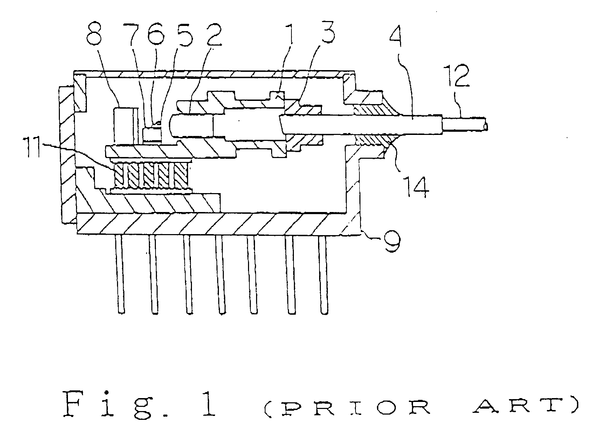

Fig. 1 illustrates a longitudinal cross-section of a conventional LD module. A laser diode (LD) chip 5 is adjusted in optical axis relative to a ferrule 4 via a lens 2 and the ferrule 4 is fixed to a base 1 via a slide ring 3 (so called because it is slidable during assembly of the component) by YAG laser welding. An optical fiber 12 is protected at a proximate end by a ferrule 4 which is a metal pipe hermetically surrounding the optical fiber. The base 1 is fixed to a package 9 by soldering, with a Peltier element 11 interleaved therebetween. The ferrule 4 is fixed to the end wall of the package 9 by solder in a manner to be hermetically sealed thereto.

Since the LD module may be used under environmental conditions ranging from -20°C to +70°C, within this range it is required to retain a stable performance. The conventional package arranged as above expands about 60»m in the axial direction of the fiber within the atmosphere of +70°C as compared with a case under the normal temperature (25°C). This displacement causes mechanical movement of the ferrule 4 fixed by a solder 14. When the ferrule 4 receives such a force, the base 1 would be deformed by being pushed by the ferrule, causing a deviation of the optical axes for the LD chip 5 and the ferrule 4. As a result, the optical output power launched into the optical fiber 12 within the ferrule 4 fluctuates 1dB or more. This phenomenon will also occur under the environmental condition of -20°C, and yet in the opposite direction, thereby to cause a fluctuation of the optical output power. That is, the conventional LD module has a drawback that its optical output power fluctuates by the fluctuation of the environmental temperature.

EP-A-0.259.018 discloses an LD module in which the optical fibre is supported in two spaced-apart ferrules, as defined in the precharacterising portion of claim 1.

An object of the present invention is to eliminate such drawbacks discussed above and provide a laser diode module which allows a stable optical output power to be achieved even for the fluctuating environmental temperature.

According to the present invention, there is provided a laser diode module comprising a hermetic package accommodating a laser diode chip therein; an optical fiber having one end optically coupled to said laser diode chip and supported by a base within said hermetic package, the optical fiber being led out from said hermetic package through a hermetic seal; a first ferrule provided at said one end of the optical fiber, said first ferrule being fixed to the base such that said laser diode chip and the end of the optical fiber are fixedly disposed relative to each other, and a second ferrule fixed hermetically to said hermetic package and to the optical fiber to form said hermetic seal; characterised in that said first ferrule and the said second ferrule are coupled by a bellows through which the optical fibre passes.

Thus, in the laser diode module according to the present invention, since the package and the ferrule are coupled via the bellows, even under environmental conditions ranging from the low to high temperatures, a stable optical output can be coupled without the optical axes of the laser diode and the optical fiber pig-tail being misaligned.

The present invention will be clearly understood from the following description with reference, by way of example to the accompanying drawings, in which:-
Fig. 1 is a longitudinal cross-section of a conventional laser diode module;
Fig. 2 is a longitudinal cross section of a laser diode module according to an embodiment of the present invention.

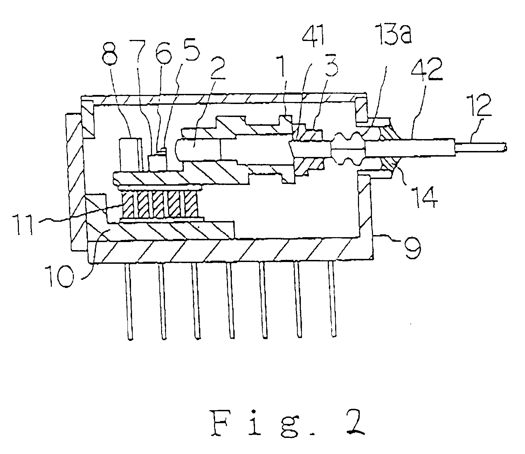

Fig. 2 illustrates a longitudinal cross section of a laser diode module according to a preferred embodiment of the present invention. A base 1 supports a lens 2 at its one end and one end of a first ferrule 41 at the other end via a slide ring 3 fixed to the base 1 by means of a YAG laser welding. In addition, the base 1 is provided with an extension for supporting a laser diode chip 5, a heat sink 6, a chip carrier 7 for supporting these and a photodiode 8. The LD chip 5 is adjusted in optical axis relative to the ferrule 41 via the lens 2.

The extension of the base 1 is opposite to an L-shaped member 10 of the package 9 at a predetermined distance therefrom, and a Peltier element 11 is disposed therebetween. The Peltier element 11 is fixed to the base 1 and the package 9 by means of soldering.

The optical fiber pig-tail 12 extends outwardly through the aperture of the package 9, within a second ferrule 42, which is sealed hermetically to the package 9 by a solder joint 14. A bellows 13a couples the neighbouring ends of the two ferrules 41,42.

The bellows 13a is, for example, an electroplated bellows formed of a single Ni layer having two crests and a spring constant of 0.1 kg/mm. The bellows may alternatively be a multilayer film of Au, and Cu having three crests, and may have the same spring constant.

If the LD module arranged as above is used in environmental conditions fluctuating between -20°C and +70°C, the package 9 is deformed about 60»m in the axial direction of the optical fiber due to thermal expansion/contraction. This deformation in turn causes a relative displacement corresponding thereto between the two ferrules 41, 42. This displacement is absorbed by expansion and contraction of the bellows 13a. If the spring constant of the bellows is of the order of 0.1 kg/mm or less, then a mechanical stress is hardly applied to the ferrules 41, 42 and the deformation of the package 9 is absorbed by the bellows 13a. In consequence, the optical axes of the LD chip and the ferrule cannot misalign, and a stable coupling can be retained despite the fluctuating temperature.

## Claims

1. A laser diode module comprising:
a hermetic package (9) accommodating a laser diode chip (5) therein;
an optical fiber (12) having one end optically coupled to said laser diode chip (5) and supported by a base (1) within said hermetic package, the optical fiber being led out from said hermetic package (9) through a hermetic seal (14);
a first ferrule (41) provided at said one end of the optical fiber (12), said first ferrule (41) being fixed to the base (1) such that said laser diode chip (5) and the end of the optical fiber are fixedly disposed relative to each other, and a second ferrule (42) fixed hermetically to said hermetic package (9) and to the optical fiber to form said hermetic seal (14);
characterised in that said first ferrule (41) and the said second ferrule (42) are coupled by a bellows (13a) through which the optical fibre passes.

2. A laser diode module according to Claim 1, wherein said bellows is an electroplated bellows formed of a multilayer film consisting of Au, Ni and Cu.

3. A laser diode module according to Claim 1, wherein said bellows is an electroplated bellows formed of a single Ni layer.

4. A laser diode module according to any preceding claim, wherein said bellows has a spring constant of 0.1 kg/mm or less.

## Patentansprüche

1. Laserdiodenmodul, das aufweist:
ein hermetisch dichtes Gehäuse (9), in dem sich ein Laserdiodenchip (5) befindet;
eine Glasfaser (12), deren eines Ende optisch an den Laserdiodenchip (5) gekoppelt ist und die innerhalb des hermetisch dichten Gehäuses von einer Basis (1) abgestützt wird, wobei die Glasfaser durch eine hermetische Dichtung (14) aus dem hermetisch dichten Gehäuse (9) herausgeführt wird;
eine erste Quetschhülse (41), die sich an dem obengenannten einen Ende der Glasfaser (12) befindet, wobei die erste Quetschhülse (41) so mit der Basis (1) verbunden ist, daß der Laserdiodenchip (5) und das Ende der Glasfaser relativ zueinander feststehend angeordnet sind, und eine zweite Quetschhülse (42), die hermetisch mit dem hermetisch dichten Gehäuse (9) und der Glasfaser verbunden ist, um die hermetische Dichtung (14) zu bilden,
dadurch gekennzeichnet, daß die erste Quetschhülse (41) und die zweite Quetschhülse (42) durch einen Dehnungsausgleicher (13a), den die Glasfaser durchläuft, verbunden sind.

2. Laserdiodenmodul nach Anspruch 1, bei dem der Dehnungsausgleicher ein galvanisch beschichteter Dehnungsausgleicher ist, der eine mehrlagige Schicht aus Au, Ni und Cu aufweist.

3. Laserdiodenmodul nach Anspruch 1, bei dem der Dehnungsausgleicher ein galvanisch beschichteter Dehnungsausgleicher ist, der aus einer einzelnen Ni-Schicht besteht.

4. Laserdiodenmodul nach einem der vorhergehenden Ansprüche, bei dem der Dehnungsausgleicher eine Federkonstante von 0,1 kg/mm oder weniger aufweist.

## Revendications

1. Module à diode laser comprenant:
un boîtier hermétique (9) dans lequel est logée une puce à diode laser (5);
une fibre optique (12) dont une extrémité est optiquement couplée à ladite puce à diode laser (5) et est supportée par un socle (1) à l'intérieur dudit boîtier hermétique, la fibre optique étant acheminée vers l'extérieur dudit boîtier hermétique (9) par l'intermédiaire d'un joint hermétique (14);
une première virole (41) prévue à ladite extrémité de la fibre optique (12), ladite première virole (41) étant fixée au socle (1) de façon que ladite puce à diode laser (5) et que l'extrémité de la fibre optique soient disposées de manière fixe l'une par rapport à l'autre et une seconde virole (42) fixée de façon hermétique audit boîtier hermétique (9) et à la fibre optique pour former ledit joint hermétique (14);
caractérisé en ce que ladite première virole (41) et ladite seconde virole (42) sont reliées par un soufflet (13a) dans lequel passe la fibre optique.

2. Module à diode laser selon la revendication 1, dans lequel ledit soufflet est un soufflet galvanisé formé d'un film multicouche constitué d'An, de Ni et de Cu.

3. Module à diode laser selon la revendication 1, dans lequel ledit soufflet est un soufflet galvanisé formé d'une couche unique de Ni.

4. Module à diode laser selon l'une quelconque des revendications précédentes, dans lequel ledit soufflet a une constante de rappel de 0,1 kg/mm ou moins.
